# EUROPEAN PATENT APPLICATION

(11) **EP 4 365 979 A1**
(43) Date of publication of application: **08.05.2024**
(21) Application number: 23207946.7
(22) Date of filing: 06.11.2023
(51) Int. Cl.: H01M 4/133, H01M 4/134, H01M 4/1393, H01M 4/1395, H01M 4/36, H01M 4/38, H01M 10/052, H01M 4/02

(54) **SILICON-CARBON COMPOSITE MATERIAL, PREPARATION METHOD THEREOF AND PREPARATION METHOD OF SILICON-CARBON COMPOSITE NEGATIVE ELECTRODE SLURRY**

(30) Priority: 07.11.2022 CN 202211387595
(71) Applicant: Hon Hai Precision Industry Co., Ltd., New Taipei City (TW); SolidEdge Solution Inc., Hsinchu 300 (TW)
(72) Inventor: CHEN, MAO-SUNG, 300 Hsinchu (TW); LAI, HONG-ZHENG, 300 Hsinchu (TW); CHANG, TSENG-LUNG, 300 Hsinchu (TW)
(74) Representative: Zaboliene, Reda

(57) **Abstract**

The present application provides a silicon-carbon composite material. The silicon-carbon composite material comprises a plurality of silicon-carbon composite material particles. Each of the plurality of silicon-carbon composite material particles comprises a silicon nanoparticle; a first carbon coating layer wrapping a surface of the silicon nanoparticle; a second carbon coating layer wrapping the first carbon coating layer; and an elastic coating layer wrapping the second carbon coating layer. The silicon nanoparticle comprises a silicon matrix and at least one doping element located in the silicon matrix. Methods for preparing the silicon-carbon composite material and for preparing a silicon-carbon composite negative electrode slurry are further provided.

## Description

### CROSS-REFERENCE TO RELATED APPLICATIONS

This application claims all benefits from the Chinese Patent Application No. 202211387595.1, filed on November 7, 2022, in the China National Intellectual Property Administration, the disclosure of which is incorporated herein by reference.

### FIELD

The invention relates to a silicon-carbon composite material, a preparation method of the silicon-carbon composite material, and a method of preparing silicon-carbon composite negative electrode slurry using the silicon-carbon composite material.

### BACKGROUND

In recent years, silicon has been regarded as a promising negative material replacing graphite due to its advantages such as low cost, environmental friendly, high specific capacity (4200 mAh g⁻¹), voltage platform slightly higher than graphite, and no lithium metal deposition on the surface during charging. However, the volume of the silicon material will expand violently (~300%) when intercalating lithium, and will shrink when removing lithium. This repeated dramatic volume change (called volume effect) will cause cracking and pulverization of the silicon material and cause structural collapse. And, the structural collapse causes the active material to be peeled off from the current collector and lose electrical contact, which reduces the cycle stability of the battery. Furthermore, due to this volume effect, it is difficult for silicon to form a stable solid-state electrolyte interface (SEI) in the electrolyte. With the destruction of the structure, new silicon is exposed on the surface and continuously forms an SEI film, which will intensify the corrosion of silicon and cause the capacity of the battery to decay.

In order to solve the above problems and improve the electrochemical performance of the silicon material, in the prior art, the silicon material is usually oxidized to form a silicon oxide shell. However, the conductivity of silicon is 103 Ω·m, and the conductivity of the oxidized material (SiOx) is lower than that, which seriously affects the charge transfer. Furthermore, using SiOx to suppress the expansion will increase the consumption of lithium ions due to electrochemical side reactions, which will affect the long-term cycle effect.

### BRIEF DESCRIPTION OF THE DRAWINGS

In order to illustrate the technical solutions of the embodiments of the present application more clearly, the accompanying drawings in the embodiments will be briefly introduced below. It should be understood that the following drawings only show some embodiments of the present application, and therefore should not be seen as limiting the scope. For one of ordinary skill in the art, other related drawings can also be obtained from these drawings without any creative work.

Implementations of the present technology will now be described, by way of embodiments, with reference to the attached figures, wherein:
Figure 1 is a schematic structural diagram of silicon-carbon composite material particles provided by an embodiment of the present disclosure.
Figure 2 is a schematic flow chart of a method for preparing a silicon-carbon composite material provided by an embodiment of the present disclosure.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures, and components have not been described in detail so as not to obscure the related relevant feature being described. The drawings are not necessarily to scale, and the proportions of certain parts may be exaggerated better illustrate details and features. The description is not to be considered as limiting the scope of the embodiments described herein.

The term "outside" refers to a region that is beyond the outermost confines of a physical object. The term "inside" indicates that at least a portion of a region is partially contained within a boundary formed by the object. The term "substantially" is defined to essentially conforming to the particular dimension, shape or other word that substantially modifies, such that the component need not be exact. For example, substantially cylindrical means that the object resembles a cylinder, but can have one or more deviations from a true cylinder. The term "comprising" means "including, but not necessarily limited to"; it specifically indicates open-ended inclusion or membership in a so-described combination, group, series and the like. It should be noted that references to "an" or "one" embodiment in this disclosure are not necessarily to the same embodiment, and such references mean at least one.

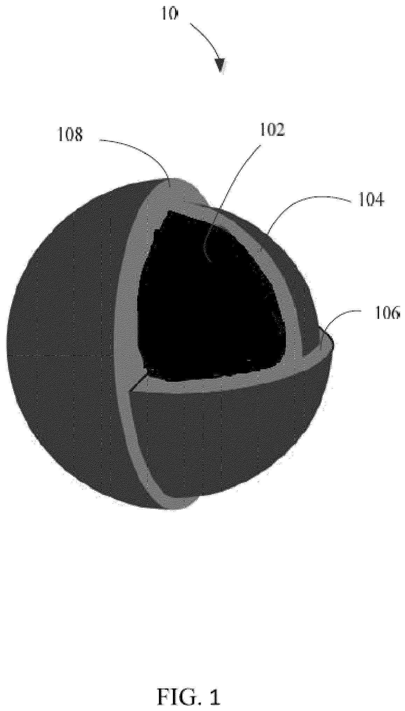

An embodiment of the present disclosure provide a silicon-carbon composite material. The silicon-carbon composite material includes a plurality of silicon-carbon composite material particles. Referring to FIG. 1, a silicon-carbon composite material particle 10 includes a silicon nanoparticle 102, a first carbon coating layer 104, a second carbon coating layer 106 and an elastic coating layer 108. The silicon nanoparticle 102 is a core, the first carbon coating layer 104 wraps a surface of the silicon nanoparticle 102, and the second carbon coating layer 106 wraps the first carbon coating layer 104. The elastic coating layer 108 wraps the second carbon coating layer 106. The silicon nanoparticle 102 includes a silicon matrix (not labeled) and at least one doping element (not labeled) located in the silicon matrix. The doping element is at least one of group IIIA elements, group VA elements and transition metal elements. The doping element is at least one selected from the group consisting of group IIIA elements, group VA elements and transition metal elements.

A particle size of the silicon-carbon composite material particles 10 is in a range from 10 microns to 20 microns. The shape of the silicon-carbon composite material particles 10 can be spherical or quasi-spherical. The quasi-spherical shape means that the shape is close to a sphere, but is not strictly spherical and is an irregular shape. The particle size of the silicon nanoparticle 102 is in a range from 10 nanometers to 100 nanometers.

The dopant elements can be a group IIIA element, such as boron (B), aluminum (Al), gallium (Ga), indium (In), thallium (Tl), germanium (Ge), tin (Sn) or lead (Pb). The dopant elements can also be VA group elements, such as nitrogen (N), phosphorus (P), arsenic (As), tellurium (Sb) or bismuth (Bi). The dopant element can also be transition metal elements, such as scandium (Sc), titanium (Ti), vanadium (V), chromium (Cr), manganese (Mn), iron (Fe), cobalt (Co), nickel (Ni), copper (Cu), zinc (Zn), yttrium (Y), zirconium (Zr), niobium (Nb), molybdenum (Mo), technetium (Tc), ruthenium (Ru), rhodium (Rh), palladium (Pd), silver (Ag) or cadmium (Cd), etc. The element doping can reserve space in the silicon lattice. When the element-doped silicon-carbon composite material is used as the negative electrode, during the cycle, the dopant elements can provide a buffer space required for the volume expansion of the silicon material, Therefore, the cycle performance of the element-doped silicon-carbon composite material is greatly improved. Each element-doped silicon-carbon composite material particle 10 can include one kind of dopant element, or can include two or more kinds of dopant elements.

In one embodiment, the silicon-carbon composite material contains no silicon oxide or almost contains no silicon oxide.

In another embodiment, a mass percentage of silicon oxide in the silicon-carbon composite material is less than or equal to 0.1%.

In a yet another embodiment, the silicon-carbon composite material contains no oxides at all or almost contains no oxides.

In one embodiment, the silicon-carbon composite material particle 10 consists of silicon nanoparticles 102, a first carbon coating layer 104, a second carbon coating layer 106 and an elastic coating layer 108.

In some embodiments, since the element-doped silicon-carbon composite material does not contain oxides, when the element-doped silicon-carbon composite material is used as in a negative electrode, there is no irreversible oxide material to increase the consumption of lithium ions during a charge-discharge cycle, thereby increasing the efficiency of the battery.

A material of the first carbon coating layer 104 includes at least one of pitch, graphite and graphene. The first carbon coating layer 104 covers the element-doped silicon nanoparticle 102, which can suppress volume expansion and reduce volume effect. A material of the second carbon coating layer 106 includes at least one of carbon black, carbon nanotubes and carbon nanofibers. The second carbon coating layer 106 covers the first carbon coating layer 104. Compared with the first carbon coating layer 104, the second carbon coating layer 106 has a higher electrical conductivity, and the second carbon coating layer 106 can provide charge transfer to increase the capacity of the battery.

A material of the elastic coating layer 108 includes a conductive material and an organic compound matrix, and the conductive material is distributed in the organic compound matrix. The conductive material includes at least one selected from the group consisting of natural graphite, artificial graphite, mesophase spherical graphite, expanded graphite, graphene and carbon nanotubes. The organic compound includes at least one selected from the group consisting of polyvinylpyrrolidone (PVP), polyvinyl alcohol (PVA), polyphthalamide (PPA), polyacrylic acid (PAA) and sodium dodecylbenzene sulfonate (SDBS). In one embodiment, the organic compound contains a carboxylic acid functional group (COOH), an amide functional group (CONH2) or an ester functional group (COOR). In another embodiment, the organic compound contains a carboxylic acid functional group (COOH).

The silicon-carbon composite material has the following advantages. First, the element doping can reserve space in the silicon lattice, and provide a required buffer space for the volume expansion of the silicon material during the cycle, so that the cycle performance of the element-doped silicon-carbon composite material is greatly improved. Second, the element-doped silicon-carbon composite material does not contain oxides, and there are no irreversible oxides to increase the consumption of lithium ions during the charge-discharge cycle, thereby improving efficiency of batteries. Third, the element-doped silicon-carbon composite material includes a first carbon coating layer and a second carbon coating layer, the first carbon coating layer is a buffer layer, which can inhibit expansion; the second carbon coating layer is a conductive layer that can provide charge transfer to increase the capacitance and improve the electrochemical performance of the silicon-carbon composite material. Fourth, the outermost elastic coating layer further plays a role in inhibiting expansion. Therefore, the silicon-carbon composite material provided by the present disclosure has better performance in inhibiting expansion.

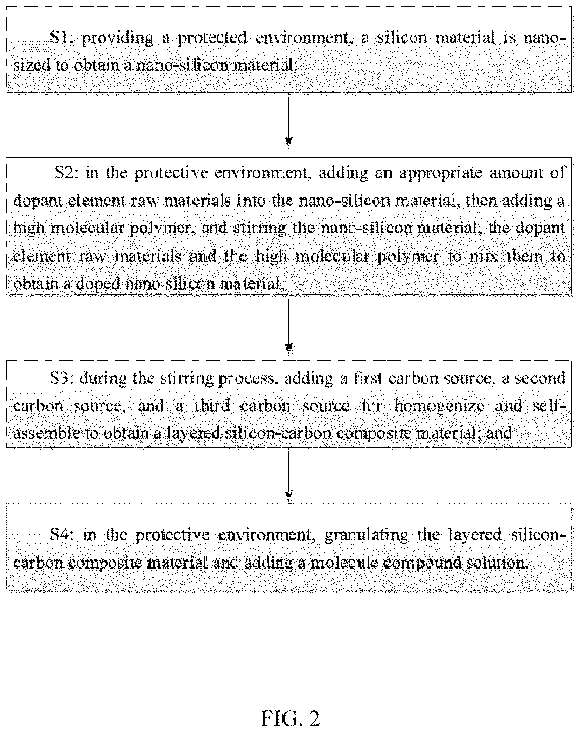

Referring to Figure 2, an embodiment of the present disclosure further provides a method for preparing a silicon-carbon composite material, which includes the following steps:
S1: in a protected environment, silicon material is nano-sized to obtain nano-silicon material, the protected environment is obtained by introducing an inert gas or adding a solvent;
S2: in the protective environment, adding an appropriate amount of dopant element raw materials into the nano-silicon material, then adding a high molecular polymer, and stirring the nano-silicon material, the dopant element raw materials and the high molecular polymer to mix them to obtain a doped nano silicon material;
S3: during the stirring process, adding a first carbon source, a second carbon source, and a third carbon source for homogenize and self-assemble to obtain a layered silicon-carbon composite material; and
S4: in the protective environment, granulating the layered silicon-carbon composite material, and adding a molecule compound solution at the same time to obtain the silicon-carbon composite material.

Hereinafter, each step of the method for preparing the element-doped silicon-carbon composite material provided by the embodiment of the present invention will be described in detail.

S1: in a protected environment, silicon material is nano-sized to obtain nano-silicon material, the protected environment is obtained by introducing an inert gas or adding a solvent.

In step S1, in some embodiments, the silicon material can be semiconductor-grade silicon material, and the particle size of the silicon material is greater than or equal to 10 microns. The nano-sized process includes but not limited to mechanical processing, mechanical ball milling, etc. The mechanical ball milling can be dry milling or wet milling. The nano-sized process can also be prepared by a chemical or physical vapor deposition method.

In step S1, in some embodiments, the inert gas includes at least one of argon (Ar), nitrogen (N2) and helium (He). The inert gas can provide an oxygen-free environment to prevent nano-silicon from being oxidized, so that the element-doped silicon-carbon composite material prepared by this method does not contain silicon oxide, which is conducive to improve the electrochemical properties and to reduce volume effects of the element-doped silicon-carbon composite material.

In step S1, in some embodiments, the solvent can be diethylene glycol (DEG), polyethylene glycol (PEG), propylene glycol (PG), dimethyl sulfoxide (DMSO) or a combination thereof. The solvent can prevent nano-silicon from being oxidized, so that the prepared element-doped silicon-carbon composite material does not contain silicon oxide, which is conducive to improve the electrochemical properties and to reduce volume effects of the element-doped silicon-carbon composite material.

In step S1, in some embodiments, the particle size of nano-silicon is ranged from 10nm to 50nm. Nano-silicon is conducive to subsequent self-assembly coating, and the preparation of silicon-carbon composite materials with suitable particle sizes is suitable for the current slurry preparing process of secondary batteries.

S2: in the protective environment, adding an appropriate amount of dopant element raw materials into the nano-silicon material, then adding a high molecular polymer, and fully stirring and mixing the nano-silicon material, the dopant element raw materials and the high molecular polymer to obtain the doped nano silicon materials.

In step S2, a raw material for the dopant element can be solid, liquid or gaseous, which will be determined by the dopant element. The dopant element can be a simple substance or a compound. The dopant elements 108 can be a group IIIA element, such as boron (B), aluminum (Al), gallium (Ga), indium (In), thallium (Tl), germanium (Ge), tin (Sn) or lead (Pb). The dopant elements 108 can also be VA group elements, such as nitrogen (N), phosphorus (P), arsenic (As), tellurium (Sb) or bismuth (Bi). The dopant elements 108 can also be transition metal elements, such as scandium (Sc), titanium (Ti), vanadium (V), chromium (Cr), manganese (Mn), iron (Fe), cobalt (Co), nickel (Ni), copper (Cu), zinc (Zn), yttrium (Y), zirconium (Zr), niobium (Nb), molybdenum (Mo), technetium (Tc), ruthenium (Ru), rhodium (Rh), palladium (Pd), silver (Ag) or cadmium (Cd), etc. For example, when the dopant element is a metal, it can be a solid element, and the raw material of the dopant element can be metal particles.

In step S2, the method of sufficiently stirring and mixing the nano-silicon, the raw material of the dopant element and the polymer can be mechanical grinding method or mechanical ball milling method. During the stirring and mixing process, since the Mohs hardness of the dopant material is smaller than that of the silicon material, the particle refinement speed of the dopant material will be faster than that of the silicon material during the processing and grinding process.

In step S2, in some embodiments, the high molecular polymer is an amphoteric high molecule having both hydrophobic groups and hydrophilic groups. Further, the high molecular polymer can be N-allyl-(2-ethylxanthyl) propionamide (NAPA), dimethylformamide (DMF) or a combination thereof. In some embodiments, the high molecular polymer is a medium containing amino groups and hydroxyl groups.

S3: during the stirring process, adding the first carbon source, the second carbon source, and the third carbon source in order to homogenize and self-assemble to obtain a layered silicon-carbon composite. material.

In step S3, in some embodiments, the first carbon source includes at least one of pitch, graphite, and graphene. The first carbon source is layered, and the carbon buffer layer formed by the first carbon source covers and wraps the nano-silicon, which can inhibit volume expansion and reduce volume effect. Moreover, during the self-assembly process, particles escaping will introduce an exothermic reaction, and the first carbon source can perform thermal diffusion to avoid agglomeration and prevent nano-silicon from being oxidized due to the exothermic reaction. A mass ratio of the first carbon source to silicon material is in a range from 1% to 15%.

In step S3, in some embodiments, the second carbon source includes at least one of carbon black, carbon nanotubes and carbon nanofibers. The carbon conductive layer formed by the second carbon source can cover the carbon buffer layer, and the second carbon source has higher electrical conductivity than the first carbon source, and the carbon conductive layer can provide charge transfer to increase the capacitance. Moreover, during the self-assembly process, particles escaping will trigger an exothermic reaction, and the second carbon source can perform thermal diffusion to avoid agglomeration and prevent nano-silicon from being oxidized due to the exothermic reaction. A mass ratio of the second carbon source to silicon material is in a range from 1% to 7%.

The third carbon source includes at least one selected from the group consisting of natural graphite, artificial graphite, mesospheric spherical graphite, expanded graphite, graphene and carbon nanotubes. A mass ratio of the third carbon source to silicon material is in a range from 1% to 7%.

The first carbon source, the second carbon source and the third carbon source are added at intervals in sequence. In one embodiment, the first carbon source, the second carbon source and the third carbon source use fineness plates according to the characteristics of dispersion (0-25 microns), after confirming that there is no agglomeration, and then adding them in sequence.

Both steps S2 and S3 are carried out accompanied by the high molecular polymer. Using the high molecular polymer, the dopant element particles can be coated on the silicon surface first. Then, using the hydrophilic and hydrophobic properties of the high molecular polymer, the high molecular polymer chain at a water-transporting end can be combined with the carbon substrate added later, so that silicon doping occurs simultaneously during the nanonization process of the material, and, the high molecular polymer and the carbon complete the ordered stack self-assembly (self-assembly). The exothermic reaction caused by the particles escaping during grinding can also be thermally diffused through the carbon substrate in the solvent to avoid particle agglomeration and oxidation caused by thermal reaction

Further, the homogenized self-assembly process can be, but not limited to, machining, electrical discharge machining, or mechanical ball milling. Wherein, mechanical ball milling can be dry milling or wet milling.

S4: in the protective environment, granulating the layered silicon-carbon composite material, and adding a molecule compound solution at the same time to obtain the silicon-carbon composite material.

In step S4, the granulating method can be commonly used in this field, and is not limited in this application. The granulating method can be two-fluid granulation, four-fluid granulation, disc granulation, or ultrasonic atomization granulation. However, a granulation environment and conditions need to be controlled to prevent materials from escaping during the granulating process.

In step S4, the molecular compound solution is obtained by dissolving the molecular compound in an organic solvent. The molecular compound includes at least one of polyvinylpyrrolidone (PVP), polyvinyl alcohol (PVA), polyphthalamide (PPA), polyacrylic acid (PAA) and sodium dodecylbenzene sulfonate (SDBS). The molecular compound can contain a carboxylic acid functional group (COOH), an amide functional group (CONH2) or an ester functional group (COOR). The organic solvent includes at least one of diethylene glycol, N-methylpyrrolidone, polyethylene glycol, propylene glycol and dimethyl sulfoxide. In some embodiments, a mass percentage concentration of the molecular compound solution is in a range from 1% to 10%.

Alternatively, before adding the molecular compound solution, the molecular compound solution can be pretreated. The pretreatment step is: adding a solid electrolyte interface film (SEI) modifier, a phosphate flame retardant and conductive carbon particles into the molecular compound solution. The SEI modifier can be at least one of LiNO₃, Li₃PO₄, LiF, LiOH, LiTFSI and LiFSI. The conductive particles can be carbon black, Super P, or Ketjen black. After pretreated, H⁺ in the molecular compound solution is partially replaced by Li⁺, which can be used as a pre-lithium effect. At the same time, after been pretreated, in the molecular compound solution, H⁺ can also be replaced by Na⁺, K⁺, and NH4⁺, which can improve the ion conductivity of the elastic coating layer covering the outer layer of the final silicon-carbon composite anode material particles.

After granulation and drying, the silicon-carbon composite material is finally obtained. The silicon-carbon composite material includes a plurality of silicon-carbon composite material particles. A silicon-carbon composite material particle includes a silicon nanoparticle, a first carbon coating layer, a second carbon coating layer land an elastic coating layer. The silicon nanoparticle is a core, the first carbon coating layer wraps a surface of the silicon nanoparticles, and the second carbon coating layer wraps the first carbon coating layer. The elastic coating layer wraps the second carbon coating layer. The silicon nanoparticle includes a silicon matrix and at least one doping element located in the silicon matrix. The doping element is one or more of group IIIA elements, group VA elements or transition metal elements. The first carbon coating layer is formed from the first carbon source, and the second carbon coating layer is formed from the second carbon source. The elastic coating layer is a composite composed of the third carbon source and the molecular compound.

Furthermore, the particle size of the silicon-carbon composite material particles obtained after granulating process is in a range from 5 µm to 10 µm. This size is suitable for a current pulping process of secondary batteries and can also avoid agglomeration in the subsequent sintering process.

The method for preparing silicon-carbon composite material provided by the present disclosure is carried out in a protective gas atmosphere, which can avoid the generation of oxides. Moreover, the process is simple, easy to control, and is suitable for an industrial production.

The present disclosure further provides a preparation method of silicon-carbon composite negative electrode slurry, which includes the following steps:
M1: providing the above-mentioned silicon-carbon composite material, and sintering the silicon-carbon composite material;
M2: adding the sintered silicon-carbon composite material to a solution containing a molecule compound to obtain a mixture; and
M3: adding an SEI modifier, a phosphate ester flame retardant and conductive particles to the mixture, mixing uniformly to obtain a silicon-carbon composite slurry.

In the step M1, the sintering step is performed in a reducing atmosphere or vacuum environment, and the sintering temperature is in a range from 500°C to 1200°C. In some embodiments, the reducing atmosphere includes a mixture of nitrogen and hydrogen. Sintering in a reducing atmosphere can remove excess functional groups on the surfaces of the materials and increase a density and an integrity of the carbon substrate coating. The reducing atmosphere can also prevent silicon from being oxidized (no oxide). The sintering step can further help reduce specific surface areas of silicon-carbon composite material particles, reduce an agglomeration phenomenon in the mixing process, and can introduce nitrogen atoms to generate N-C bonds. As such, sintering in a reducing atmosphere can effectively improve the electron adsorption force between nano-silicon and the supported carbon material, and can remove functional groups on the surfaces of materials that easily cause lithium trapping.

In step M2, the molecular compound solution is obtained by dissolving the molecular compound in an organic solvent. The molecular compound includes at least one selected from the group consisting of polyvinylpyrrolidone (PVP), polyvinyl alcohol (PVA), polyphthalamide (PPA), polyacrylic acid (PAA) and sodium dodecylbenzene sulfonate (SDBS). The molecular compound can contain a carboxylic acid functional group (COOH), an amide functional group (CONH2) or an ester functional group (COOR). The organic solvent includes at least one selected from the group consisting of diethylene glycol, N-methylpyrrolidone, polyethylene glycol, propylene glycol and dimethyl sulfoxide. A mass percentage concentration of the molecular compound solution is in a range from 1% to 10%.

In step M3, the SEI modifier can be at least one of LiNO₃, Li₃PO₄, LiF, LiOH, LiTFSI and LiFSI. The conductive particles can be carbon black, Super P, or Ketjen black.

After the silicon-carbon composite negative electrode slurry is coated, rolled, and dried, a silicon-carbon composite negative electrode that can suppress cyclic expansion can be obtained.

In this embodiment, a silicon-carbon composite slurry is obtained by compounding the silicon-carbon composite negative electrode material, conductive particles and molecular compound solution with a mass ratio of 88:1:11 through the above preparation method of the silicon-carbon composite slurry. A weight percentage of a solid material in the slurry is about 50%. The slurry is coated on a copper foil current collector and dried under vacuum to obtain a negative electrode sheet. Then, conventional production processes are used to assemble the ternary positive electrode sheet, 1 mol/L LᵢPF₆/EC+DMC+EMC (v/v=1:1:1) electrolyte, and Celgard 2400 separator for soft pack battery stacking and 5Ah assembly. First, the battery is half-saturated (3.6V), degassed, and then charged to 4.3V. Then, the battery is discharged to 3.0V for the first time, and the first Coulombic efficiency is calculated. Then cycle 100 times at 1C to calculate the capacity retention rate. Among them, the content of the negative electrode material in the battery is 20 mg/cm², and the content of the positive electrode material in the positive electrode of the battery is 2.2 mg/cm². Its first Coulombic efficiency is 87.1%, and after 100 cycles, the Coulombic efficiency is 80%. When using the negative electrode material provided by the general technology, under the same conditions, the first Coulombic efficiency is 82.5%, and after 100 cycles, the Coulombic efficiency is 66%. This comparison result proves that the first Coulomb efficiency of the battery using the silicon-carbon composite material provided by the embodiment of the present disclosure is better than that of the battery obtained by the general process in the prior art. Therefore, the silicon-carbon composite negative electrode material provided by the embodiment of the present disclosure has a pre-lithium effect, and the long cycle retention rate indicates that the silicon-carbon composite material has the effect of inhibiting degradation.

In the preparation method of the silicon-carbon composite material provided by the present disclosure, after completing the self-assembly multi-layer structure, the material can be made dense through granulation technology, thereby reducing dead lithium phenomenon caused by excessive holes during a lithium ion activation process, which can avoid heat accumulation due to rising impedance during charging, which causes thermal escape. The two sintering processes complete granulation at a same time. The resulting material particles are solid balls instead of hollow balls, which avoids affecting the pulping of battery pole pieces. In the protective atmosphere environment, the generation of oxides in the silicon-carbon composite anode material can be avoided and the density can be increased.

The embodiments shown and described above are only examples. Even though numerous characteristics and advantages of the present technology have been set forth in the foregoing description, together with details of the structure and function of the present disclosure, the disclosure is illustrative only, and changes may be made in the detail, including in matters of shape, size, and arrangement of the parts within the principles of the present disclosure, up to and including the full extent established by the broad general meaning of the terms used in the claims.

Depending on the embodiment, certain of the steps of methods described may be removed, others may be added, and the sequence of steps may be altered. The description and the claims drawn to a method may comprise some indication in reference to certain steps. However, the indication used is only to be viewed for identification purposes and not as a suggestion for ordering the steps.

## Claims

1. A silicon-carbon composite material for a negative electrode, comprising:
a plurality of silicon-carbon composite material particles, each of the plurality of silicon-carbon composite material particles comprising:
a silicon nanoparticle;
a first carbon coating layer wrapping a surface of the silicon nanoparticle;
a second carbon coating layer wrapping the first carbon coating layer;
an elastic coating layer wrapping the second carbon coating layer; wherein the silicon nanoparticle comprises a silicon matrix and at least one doping element located in the silicon matrix.

2. The silicon-carbon composite anode material of claim 1, wherein the at least one doping element is selected from the group consisting of IIIA group elements, VA group elements and transition metal elements.

3. The silicon-carbon composite material of claim 1, wherein a mass percentage of silicon oxide in the silicon-carbon composite material is less than or equal to 0.1%.

4. The silicon-carbon composite material of claim 1, wherein a material of the first carbon coating layer comprises at least one selected from the group consisting of pitch, graphite and graphene.

5. The silicon-carbon composite material of claim 1, wherein a material of the second carbon coating layer comprises at least one selected from the group consisting of carbon black, carbon nanotubes and carbon nanofibers.

6. The silicon-carbon composite material of claim 1, wherein the elastic coating layer comprises a conductive material and an organic compound matrix, and the conductive material is distributed in the organic compound matrix.

7. The silicon-carbon composite material of claim 8, wherein the organic compound comprises at least one selected from the group consisting of polyvinylpyrrolidone (PVP), polyvinyl alcohol (PVA), polyphthalamide (PPA), polyacrylic acid (PAA) and sodium dodecylbenzene sulfonate (SDBS).

8. The silicon-carbon composite material of claim 7, wherein the organic compound contains a carboxylic acid functional group (COOH), an amide functional group (CONH₂) or an ester functional group (COOR).

9. A method for preparing a silicon-carbon composite material, comprising:
S1: providing a protected environment, a silicon material is nano-sized to obtain a nano-silicon material;
S2: in the protective environment, adding an appropriate amount of dopant element raw materials into the nano-silicon material, then adding a high molecular polymer, and stirring the nano-silicon material, the dopant element raw materials and the high molecular polymer to mix them to obtain a doped nano silicon material;
S3: during the stirring process, adding a first carbon source, a second carbon source, and a third carbon source for homogenize and self-assemble to obtain a layered silicon-carbon composite material; and
S4: in the protective environment, granulating the layered silicon-carbon composite material and adding a molecule compound solution.

10. The method of claim 9, wherein in step S2, the high molecular polymer is an amphoteric polymer and has both a hydrophobic group and a hydrophilic group.

11. The method of claim 9, wherein in step S3, wherein the third carbon source comprises at least one selected from the group consisting of natural graphite, artificial graphite, mesospheric spherical graphite, expanded graphite, graphene and carbon nanotubes.

12. The method of claim 9, wherein the molecular compound solution is obtained by dissolving a molecular compound in an organic solvent, the molecular compound is selected from the group consisting of polyvinyl alcohol (PVA), polyphthalamide (PPA), polyacrylic acid (PAA) and sodium dodecylbenzene sulfonate (SDBS).

13. The method of claim 9, in step S4, before adding the molecular compound solution, the molecular compound solution is pre-treated, and the pre-treatment step comprises adding a solid electrolyte interface film modifier, a phosphate flame retardant and conductive carbon particles into the molecular compound solution.

14. A method for preparing silicon-carbon composite negative electrode slurry, comprising:
M1: providing a silicon-carbon composite material comprising:
a plurality of silicon-carbon composite material particles, each of the plurality of silicon-carbon composite material particles comprising:
a silicon nanoparticle;
a first carbon coating layer wrapping a surface of the silicon nanoparticle;
a second carbon coating layer wrapping the first carbon coating layer;
an elastic coating layer wrapping the second carbon coating layer; wherein the silicon nanoparticle comprises a silicon matrix and at least one doping element located in the silicon matrix.;
M2: sintering the silicon-carbon composite material, and adding the sintered silicon-carbon composite material into a solution containing at least one molecule compound to obtain a mixture; and
M3: adding a solid electrolyte interface film modifier, a phosphate ester flame retardant and conductive particles to the mixture, and mixing them to obtain a silicon-carbon composite negative electrode slurry.

15. The method of claim 14, wherein the silicon-carbon composite material is sintered in a reducing atmosphere or vacuum environment, and the sintering temperature is in a range from 500°C to 1200°C.
